# EUROPEAN PATENT SPECIFICATION

(11) **EP 0 499 328 B1**
(45) Date of publication and mention of the grant of the patent: **29.04.1998**
(21) Application number: 92200388.4
(22) Date of filing: 11.02.1992
(51) Int. Cl.: C07F 9/58

(54) **Process for the preparation of diarylphosphino pyridines**
Verfahren zur Herstellung von diarylphosphino Pyridinen
Procédé de préparation de diarylphosphino pyridines

(30) Priority: 15.02.1991 GB 9103214
(43) Date of publication of application: 19.08.1992
(73) Proprietor: SHELL INTERNATIONALE RESEARCH MAATSCHAPPIJ B.V., 2596 HR Den Haag (NL)
(72) Inventor: Klusener, Peter Anton August, NL-1031 CM Amsterdam (NL); Suykerbuyk, Jacoba Catherina Lucia Johanna, NL-1031 CM Amsterdam (NL); Verbrugge, Pieter Adriaan, NL-1031 CM Amsterdam (NL)

(56) References cited:
- EP-A- 0 386 834
- JOURNAL OF ORGANIC CHEMISTRY vol. 43, no. 5, 1978, EASTON US pages 947 - 949 G. R. NEWKOME 'Chemistry of Heterocyclic Compounds.27. An Improved Preparation of Pyridyldiphenylphosphines'
- JOURNAL OF GENERAL CHEMISTRY USSR vol. 54, no. 4, 1984, NEW YORK US page 866 A. A. TOLMACHEV 'Convenient Method for the Preparation of Diphenylpyridyl- Phosphines, -Arsines, and -Stibines'

## Description

This invention relates to a process for the preparation of a diarylphosphino pyridine.

Diarylphosphino pyridines, also named diaryl pyridyl phosphines, have been known for a long time. For example, F.G. Mann and J. Watson, J.Org.Chem.,13, 502 (1948), describe the preparation of diphenyl 2-pyridyl phosphine by a Grignard reaction of magnesium 2-pyridyl bromide and chloro diphenyl phosphine.

An improved preparation method was reported by G.R. Newkome and D.C. Hager, J.Org.Chem.,43, 947 (1978), involving the reaction of lithium diphenyl phosphide and a 2-halo pyridine, wherein the lithium diphenyl phosphide precursor was obtained by reaction of chloro diphenyl phosphide and two equivalents of lithium. In this reaction lithium chloride is formed as an inert side product which does not require elimination prior to the subsequent reaction with the pyridyl halide. The desired diphenyl 2-pyridyl phosphine was obtained with a yield of 55% relative to 2-bromo pyridine, and 50% relative to 2-chloro pyridine.

The above publications disclose useful preparation methods, if diarylphosphino phosphines are to be prepared on a small scale in the laboratory. However, the high cost of the precursors and the moderate yields preclude the application of these methods on an industrial scale for producing the pyridyl phosphines at acceptable costs. Newkome and Hager briefly refer to alternate procedures for obtaining their lithium diphenyl phosphide precursor, but closer inspection of the relevant references reveals that such alternate methods could be expected to involve further problems. So, K. Issleib and H.O. Fröhlich, Z.Naturforsch., 14b, 349 (1959), report that the use of a convenient solvent such as tetrahydrofurane (THF) and the use of a convenient alkali metal such as lithium in the reductive cleavage of triphenyl phosphine, were not allowing for isolation of the pure products. A.M. Aguiar, et al., J.Org.Chem., 27, 1001 (1962) recognized the problem of the reactivity of the phenyl lithium side product, when a subsequent reaction of lithium diphenyl phosphide and an alkyl halide for producing asymmetric phosphines is envisaged. For, phenyl lithium can be expected to react with the subsequent halide reactant. Using excess of benzyl chloride they observed the formation of 1,2-diphenylethyl diphenyl phosphine. Their attempts to elimination of the phenyl lithium side product were partially successful only, and they could isolate phosphine derivatives such as phosphine oxides or phosphonium salts rather than the free phosphines in yields not higher than about 60%. Clearly, Newkome and Hager were aware of these and similar problems when selecting the expensive chloro diphenyl phosphine rather than the cheap triphenyl phosphine as precursor for the phosphino pyridines.

Finally, Tolmachev et al describe in J. Gen. Chem. of the USSR, 54(4), 866 (1984) a process for the preparation of diphenylpyridylphosphines in liquid ammonia as solvent. Unfortunately, the safe application of liquid ammonia (toxic, to be handled below its boiling point of -33 °C) required special equipment. This makes this process rather unattractive.

Recently, the interest in diarylphosphino pyridines increased in view of their potential industrial utility as component of catalysts for certain carbonylation processes, for example as described in EP-A-271144 or EP-A-282142. Accordingly, there exists a need of a preparation method for the present diarylphosphino pyridines, which allows for the use of readily available and cheap starting materials, such as triaryl phosphines and pyridyl chlorides, and provides high yields obviating extensive purification operations.

The present invention fulfils this need by providing a process for the preparation of a diarylphosphino pyridine comprising the steps of: a) reacting a triaryl phosphine with about two equivalents of an alkali metal in a substantially aprotic solvent medium to form an alkali diarylphosphide and an alkali aryl; b) selectively eliminating the alkali aryl formed by reaction with a proton donor to form one or more inert alkali compounds; c) reacting the alkali diarylphosphide with about one equivalent per halide group of an optionally substituted pyridyl halide; and d) separating the diarylphosphino pyridine formed.

The process according to the present invention is conveniently carried out in the liquid phase, and imposes no restrictions upon the choice of aprotic solvent medium. The solvent may be selected in view of its boiling point or solubilizing properties suitable for later purification operations. In practice, ethereal solvents are preferred, more particularly tetrahydrofuran (THF), diethyl ether, or dioxane. THF is the most preferred solvent.

The triaryl phosphine starting material used in the process according to the invention can be any phosphine of formula PR¹R²R³ wherein each of R¹, R², and R³ independently represents a substituted or unsubstituted aryl group. However, practically phosphines PR₃ having three the same groups R will be preferred in view of the availability of such phosphines. Examples of suitable optionally substituted aryl groups R are the naphthyl group and in particular the phenyl group, preferably containing not more than 18, in particular in the range of from 6 to 14 carbon atoms. Suitable substituents are inert under the conditions of the present process, and include hydrocarbyl and hydrocarbyloxy groups. Two substituents may be linked together, so as to form a condensed ring system together with the aryl ring, such as in the naphthyl group.

Examples of suitable phosphines are tri-p-tolyl phosphine, tri-o-methoxyphenyl phosphine, and tri-p-methoxyphenyl phosphine, and in particular triphenyl phosphine.

For reductive cleavage of the triaryl phosphine any of the alkali metals, lithium, sodium, potassium, cesium or rubidium may be used in principle. In view of costs, lithium, sodium and potassium are preferred.

According to a preferred embodiment of the invention the reductive cleavage of the triaryl phosphine is accelerated by addition of a catalytic amount of a polyaromatic charge transfer agent, for example naphthalene, anthracene, or biphenyl.

The pyridyl halide starting material is selected with regard to the desired phosphino pyridine end product. It should be understood that within the scope of the present invention, phosphino pyridines are prepared having the phosphino substituent bound to a carbon atom of the pyridine ring. Accordingly, pyridyl halides to be used in the present process have the halo substituent at the 2-, 3-, or 4-position, preferably at the 2-position in view of the excellent catalytic properties of the 2-pyridyl phosphines (2-phosphino pyridines). The pyridyl halide starting material may have more than one halo substituent. Suitable pyridyl halides may be unsubstituted or further substituted by one or more inert substituents. Representative inert substituents include hydrocarbyl and hydrocarbyloxy groups which in turn may be unsubstituted or substituted with any of the inert substituents mentioned. Two substituents may be linked together, so as to form a condensed ring system together with the pyridyl ring, such as in quinoline, isoquinoline, and 1,5-pyrindine. When reference is made to an optionally substituted hydrocarbyl or hydrocarbyloxy group, the hydrocarbyl moiety preferably represents an alkyl group, a cycloalkyl group or an aryl group. An alkyl group preferably has up to 20 carbon atoms, more preferably up to 12 carbon atoms, especially from 1 to 4 carbon atoms. For example, an alkyl group may be a methyl, ethyl, n-propyl, i-propyl, n-butyl, i-butyl or t-butyl group. A cycloalkyl group preferably has from 3 to 6 carbon atoms. An aryl group is preferably a phenyl group.

Examples of suitable pyridyl halides are: 2-fluoropyridine. 2-chloropyridine, 2-bromopyridine, 2-iodopyridine, 3-chloropyridine, 4-chloropyridine, 2-chloro-5-methylpyridine, 2-chloro-6-methylpyridine, 2-bromo-3-methylpyridine, 2-chloro-4,6-dimethylpyridine, 2-chloro-3-methoxypyridine, 2-chloro-6-methoxypyridine and 2,6-dichloropyridine. It is a specially advantageous feature of the present invention, that pyridyl chlorides can be used as starting material in the present process. Accordingly, the optionally substituted pyridyl halide is preferably a pyridyl chloride.

The step of selectively eliminating the alkali aryl formed, constitutes an important feature of the present process. Alkali aryls are highly basic and reactive towards other compounds including the present pyridyl halide precursors, some of the phosphino pyridine products, and many solvents.

When the present process is conducted in the preferred ether solvents such as THF, it should be accounted for the fact, that some of the lithium aryl will metalate the THF solvent during step a) of the present process, which metalated THF partially decomposes into less reactive products such as ethene and lithium ethenolate. Since addition of one equivalent of eliminating agent could destruct some of the lithium diarylphosphide intermediate besides the remaining lithium aryl/lithium THF, it could disturb the stoichiometric balance of step c) of the present process.

It was surprisingly found, that the need of adapting the equivalency of the amount of added eliminating agent, is obviated by using a proton donor for selective elimination of the alkali aryl. For optimal yields in step c) of the present process, the proton donor should preferably be one having a conjugated base which is less nucleophilic, or basic, than the alkali diarylphosphide involved. Very suitable proton donors include aliphatic alcohols, in particular tertiary aliphatic alcohols, enolizable ketones, ammonium salts, water, and acid addition salts of, for example, amines. One equivalent of such preferred proton donors, relative to the starting triarylphosphine, can be added in step b) of the present process. Thus, complete elimination of the alkali aryl inclusive any metalated solvent is assured, without any significant elimination of the alkali diarylphosphide intermediate.

Weak proton donors may be used in excess. THF acting to some extent as a weak proton donor towards very strong bases such as alkali aryls, may act as the elimination agent, when used as solvent. However, the metalation reaction of THF is slow. Therefore, prolonged heating, at reflux, will be necessary to assure complete elimination of the alkali aryl and decomposition of the metalated THF into inert alkali compounds.

The separation and optional purification of the phosphino pyridine product in step d) of the present process, can be effected by any appropriate separation method known to the skilled artisan, such as (re)crystallization and/or extraction, and does not require further explanation.

The present process can be carried out under convenient reaction conditions. In view of the well-known oxidation sensitivity of phosphines and alkali metal (compounds), the present process is routinely carried out under an inert atmosphere, for example, a nitrogen or argon atmosphere. The temperature and pressure are not critical. Any temperature between -40 °C and +120 °C will be suitable. For practical reasons, a temperature in the range of from -20 °C and 70 °C is preferred. Most conveniently, the present process is conducted at ambient pressure.

The invention will be further illustrated by the examples which follow.

### Example 1

To an effectively stirred solution of 13.1 g of triphenylphosphine (50 mmol) in 150 ml of dry THF under an argon atmosphere was added 0.84 g of lithium metal (120 mmol). When the reaction was complete after 2 hr, as established by ³¹P NMR, the excess lithium was removed. With ¹³C NMR analysis it was determined that during the reductive cleavage with lithium 20% of the phenyl lithium had been eliminated by reaction with THF. Subsequently the dark brown solution was cooled to 0 °C. Thereupon, an amount of 1.8 g of ethanol (40 mmol) equivalent to the remaining phenyl lithium, was added, whereby the temperature increased to about 15 °C. Subsequently, 5.7 g of 2-chloropyridine (50 mmol) was added, and the temperature was allowed to rise. The mixture obtained was worked up by distillation of THF at reflux and atmospheric pressure, vacuum drying, addition of 50 ml of 3M aqueous ammonium chloride solution and 50 ml of dichloromethane, phase separation, washing, filtration of the combined organic phases, vacuum concentration, and recrystallization from boiling hexane. After cooling to ambient temperature 9.9 g of white crystalline 2-diphenylphosphino pyridine (yield 75 %, purity >99%) was collected by filtration.

### Example 2

Example 1 was exactly repeated, except for using 3.7 g of tert-butanol (50 mmol) in stead of 1.8 g of ethanol (40 mmol) for elimination of phenyl lithium. A first fraction of 10 g (yield 76%, purity > 99%) was obtained. The filtrate was cooled to -30 °C, after which a further fraction of 0.8 g (yield 6%, purity >95%) was collected.

### Example 3

Example 1 was repeated, except for using 0.75 (107 mmol) instead of 0.84 g of lithium, 3.39 g of tert-butanol (45.8 mmol) instead of 1.8 g of ethanol, and 3.52 g of 2,6-dichloropyridine (23.8 mmol) instead of 5.7 g of 2-chloropyridine. After recrystallization from boiling hexane, 7.8 g of white crystalline 2,6-bis(diphenylphosphino)pyridine was collected (yield 73.4%, purity 97.5%).

### Example 4

Example 1 was repeated, except for using 9.28 g (35.4 mmol) of triphenylphosphine instead of 13.1 g, 100 ml instead of 150 ml of THF, 0.67 g (95.3 mmol) instead of 0,84 g, 2.52 g of tert-butanol (34.0 mmol) instead of 1.8 g of ethanol, and 5.50 g of 6-methyl-2-(diphenylphosphino)pyridine (43.1 mmol) instead of 2-chloropyridine. The yield was 10.1 g of white crystalline 6-methyl-2-(diphenylphosphino)pyridine (85%).

### Comparative Example A

Example 1 was repeated, except for omitting the addition of any ethanol for elimination of the phenyl lithium still present, and using 4.8 g (42 mmol) instead of 5.7 g of 2-chloropyridine. The workup was done by addition of water and phase separation. The organic phase was analyzed by gas chromatography, and 2-(diphenylphosphino)pyridine was found to be present for 27%.

### Example 5

To an effectively stirred solution of 13.1 g of triphenylphosphine (50 mmol) in 100 ml of dry THF under an argon atmosphere was added 2.42 g of sodium metal (105 mmol), and the mixture was heated under reflux for 24 hours. Thereupon the mixture was cooled to 0 °C, and 0.37 g of tert-butanol (5 mmol) was added for reaction with the remaining phenyl sodium. Subsequently, 5.7 g of 2-chloropyridine (50 mmol) was added, and the temperature was allowed to rise. The mixture obtained was worked up as described in Example 1 to give a crude product containing 78% by weight of 2-(diphenylphosphino)pyridine (chemical yield 82%). Recrystallization from ethanol/water gave 10.1 g of 2-(diphenylphosphino)pyridine as a white solid.

### Example 6

Example 5 was repeated, except for adding 0.5 g of naphthalene to the initial triphenylphosphine/THF solution. Upon addition of 2.42 g of sodium metal and heating under reflux, the reaction appeared to be completed after 4 hours. Further proceeding as described in Example 3 gave 13.95 g of crude product containing 86 % by weight of 2-(diphenylphosphino)pyridine (chemical yield 92%) and 10.65 g of recrystallized white solid 2-(diphenylphosphino)pyridine.

## Claims

1. A process for the preparation of a diarylphosphino pyridine comprising the steps of:
a) reacting a triaryl phosphine with about two equivalents of an alkali metal in a substantially aprotic solvent medium to form an alkali diarylphosphide and an alkali aryl;
b) selectively eliminating the alkali aryl formed, by reaction with a proton donor to form one or more inert alkali compounds;
c) reacting the alkali diarylphosphide with about one equivalent per halide group of an optionally substituted pyridyl halide; and
d) separating the diarylphosphino pyridine formed.

2. The process of claim 1, wherein the substantially aprotic solvent is an ether.

3. The process of claim 2, wherein the substantially aprotic solvent is selected from tetrahydrofurane, diethylether and dioxane.

4. The process of any one of claims 1-3, wherein the proton donor is selected from alcohols and enolizable ketones.

5. The process of claim 4, wherein the proton donor is selected from tertiary alcohols.

6. The process of any one of claims 1-5, wherein the alkali metal is lithium, sodium, or potassium.

7. The process of any one of claims 1-6, wherein the optionally substituted pyridyl halide is a 2-pyridyl halide.

8. The process of any one of claims 1-6, wherein the optionally substituted pyridyl halide is a pyridyl chloride.

9. The process of any one of claims 1-8, wherein step a) is conducted in the presence of a polyaromatic charge transfer agent.

## Patentansprüche

1. Verfahren zur Herstellung eines Diarylphosphinopyridins, das die folgenden Stufen umfaßt:
a) Umsetzen eines Triarylphosphins mit etwa zwei Äquivalenten eines Alkalimetalles in einem im wesentlichen aprotischen Lösungsmedium zur Ausbildung eines Alkalidiarylphosphids und eines Alkaliaryls;
b) selektives Eliminieren des gebildeten Alkaliaryls durch Umsetzung mit einem Protonendonor zur Ausbildung einer oder mehrerer inerter Alkaliverbindungen;
c) Umsetzen des Alkalidiarylphosphids mit etwa einem Äquivalent eines gegebenenfalls substituierten Pyridylhalogenids je Halogenidgruppe; und
d) Abtrennung des gebildeten Diarylphosphinopyridins.

2. Verfahren nach Anspruch 1, worin das im wesentlichen aprotische Lösungsmittel ein Ether ist.

3. Verfahren nach Anspruch 2, worin das im wesentlichen aprotische Lösungsmittel unter Tetrahydrofuran, Diethylether und Dioxan ausgewählt ist.

4. Verfahren nach einem der Ansprüche 1 bis 3, worin der Protonendonor unter Alkoholen und enolisierbaren Ketonen ausgewählt ist.

5. Verfahren nach Anspruch 4, worin der Protonendonor unter tertiären Alkoholen ausgewählt ist.

6. Verfahren nach einem der Ansprüche 1 bis 5, worin das Alkalimetall Lithium, Natrium oder Kalium ist.

7. Verfahren nach einem der Ansprüche 1 bis 6, worin das gegebenenfalls substituierte Pyridylhalogenid ein 2-Pyridylhalogenid ist.

8. Verfahren nach einem der Ansprüche 1 bis 6, worin das gegebenenfalls substituierte Pyridylhalogenid ein Pyridylchlorid ist.

9. Verfahren nach einem der Ansprüche 1 bis 8, worin die Stufe a) in Anwesenheit eines polyaromatischen Ladungstransfermittels ausgeführt wird.

## Revendications

1. Procédé de préparation d'une diarylphosphinopyridine, caractérisé en ce qu'il comprend les étapes consistant à :
a) faire réagir une triarylphosphine avec environ deux équivalents d'un métal alcalin dans un milieu solvant sensiblement aprotique pour former un phosphure de diarylmétal alcalin et un arylmétal alcalin,
b) sélectivement éliminer l'arylmétal alcalin formé par réaction avec un donneur de protons, pour former un ou plusieurs composés de métal alcalin inertes,
c) faire réagir le phosphure de diarylmétal alcalin avec environ un équivalent par radical halogénure d'un halogénure de pyridyle éventuellement substitué et
d) séparer la diarylphosphinopyridine ainsi formée.

2. Procédé suivant la revendication 1, caractérisé en ce que le solvant sensiblement aprotique est un éther.

3. Procédé suivant la revendication 2, caractérisé en ce que l'on choisit le solvant sensiblement aprotique parmi le tétrahydrofuranne, l'éther diéthylique et le dioxanne.

4. Procédé suivant l'une quelconque des revendications 1 à 3, caractérisé en ce que l'on choisit le donneur de protons parmi les alcools et les cétones énolisables.

5. Procédé suivant la revendication 4, caractérisé en ce que l'on choisit le donneur de protons parmi les alcools tertiaires.

6. Procédé suivant l'une quelconque des revendications 1 à 5, caractérisé en ce que le métal alcalin est le lithium, le sodium ou le potassium.

7. Procédé suivant l'une quelconque des revendications 1 à 6, caractérisé en ce que l'halogénure de pyridyle éventuellement substitué est un halogénure de 2-pyridyle.

8. Procédé suivant l'une quelconque des revendications 1 à 6, caractérisé en ce que l'halogénure de pyridyle éventuellement substitué est un chlorure de pyridyle.

9. Procédé suivant l'une quelconque des revendications 1 à 8, caractérisé en ce que l'on entreprend l'étape a) en présence d'un agent de transfert de charges polyaromatique.
